# EUROPÄISCHE PATENTSCHRIFT

(11) **EP 3 777 050 B1**
(45) Veröffentlichungstag und Bekanntmachung des Hinweises auf die Patenterteilung: **14.08.2024**
(21) Anmeldenummer: 19715429.7
(22) Anmeldetag: 27.03.2019
(51) Int. Cl.: H04L 12/403

(54) **DATENBUS-SYSTEM FÜR EIN FAHRZEUG**
DATABUS SYSTEM FOR A VEHICLE
SYSTÈME DE BUS DE DONNÉES POUR UN VÉHICULE

(30) Priorität: 04.04.2018 DE 102018205082
(43) Veröffentlichungstag der Anmeldung: 17.02.2021
(73) Patentinhaber: Continental Automotive Technologies GmbH, 30175 Hannover (DE)
(72) Erfinder: ZAGLMANN, Werner, 81737 München (DE); KELLNER, Jürgen, 81737 München (DE); SIMM, Joerg, 81737 München (DE)
(74) Vertreter: Continental Corporation
(86) Internationale Anmeldenummer: PCT/EP2019/057732
(87) Internationale Veröffentlichungsnummer: WO 2019/192907

(56) Entgegenhaltungen:
- WO-A1-2010/009584
- US-A1- 2009 121 776
- US-A1- 2014 281 078

## Beschreibung

US 2009/121776 A1 und WO 2010/009584 A1 offenbaren Datenbusse.

Die Erfindung betrifft das Anlernen einer Einbauposition von Slave-Modulen durch ein funkbasiertes Fahrzeug-Zugangssystem entsprechend dem unabhängigen Anspruch 1 sowie den abhängigen Ansprüchen 2-7.

In einem Fahrzeug gibt es verschiedene Anwendungsfälle, in denen für eine Fahrzeugfunktion erfüllende Slave-Module eine bestimmte Einbauposition festgelegt sein muss.

Ein exemplarisches Anwendungsbeispiel ist ein funkbasiertes Fahrzeug-Zugangssystem zum Entriegeln und Verriegeln von Fahrzeugtüren des Fahrzeugs. Ein solches Fahrzeug-Zugangssystem verfügt üblicherweise über mehrere funkbasierte Module in Form von Sendern/Empfängern bzw. Transmittern/Receivern, die über einen Datenbus mit einer dazugehörigen Steuereinrichtung des Fahrzeugs kommunizieren und mit einem funkbasierten Fahrzeugschlüssel interagieren, damit die Steuereinrichtung bei einer gültigen Zugangskodierung die Fahrzeugtüren entriegelt. Um eine möglichst genaue Ortsbestimmung des Fahrzeugschlüssels außerhalb des Fahrzeugs zu ermöglichen, können mehrere der Module eine individuell zugewiesene bzw. vorbestimmte Einbauposition innerhalb des Fahrzeugs haben, über die die Steuereinrichtung die Ortsbestimmung vornehmen kann. Somit unterscheiden sich diese Module zumindest in ihrer Einbauposition, so dass es notwendig ist, jedes Modul individualisiert, z.B. auch mit einer individuellen Logistik-Teilenummer, zur Verfügung zu stellen und dieses genau an der individuellen Einbauposition zu verbauen. Dies kann neben dem hohen logistischen Aufwand auch zu einer erhöhten Fehleranfälligkeit hinsichtlich des individuellen Einbauorts führen, wenn z.B. die jeweiligen Einbaupositionen der Module vertauscht werden.

Es ist daher eine Aufgabe der Erfindung, unter Einsatz konstruktiv möglichst einfacher Mittel eine Möglichkeit zum Anlernen einer Einbauposition von Modulen in einem Fahrzeug zu schaffen.

Diese Aufgabe wird durch die Gegenstände der unabhängigen und der nebengeordneten Ansprüche gelöst. Vorteilhafte Weiterbildungen und Ausführungsformen sind in den abhängigen Ansprüchen, der nachfolgenden Beschreibung und den begleitenden Figuren angegeben.

Die Erfindung bezieht sich auf ein funkbasiertes Fahrzeug-Zugangssystem. Dieses kann vorzugsweise das UHF-Band, das Bluetooth Low Energy (BLE) - System oder das Ultra Wideband (UWB) nutzen. Prinzipiell dient das Fahrzeug-Zugangssystem dazu, nur berechtigten Nutzern, die sich im Besitz eines passend kodierten Fahrzeugschlüssels befinden, Zugang zu dem Fahrzeug zu gewähren.

Das Fahrzeug-Zugangssystem weist eine Steuereinrichtung, wie z.B. ein Steuergerät des Fahrzeugs, wie etwa einen Body-Controller auf, zum wahlweisen Entriegeln und Verriegeln von Fahrzeugtüren, wobei dies indirekt über die Ansteuerung von Aktoren bzw. der Türschlösser erfolgen kann. Zudem verfügt das Fahrzeug-Zugangssystem über das oben beschriebene Datenbus-System in einer oder mehreren der oben erläuterten Ausführungsvarianten. Dabei weisen die oben beschriebenen Slave-Module des Datenbus-Systems ferner jeweils einen mit der Steuereinrichtung verbundenen Funk-Transceiver für eine Funkverbindung mit dem Fahrzeugschlüssel oder einen anderem Gerät mit Funktransceiver auf.

Z.B. aufgrund einer geringen Sendeleistung der verwendeten Funktechnik kann es notwendig sein, mehrere der oben genannten Slave-Module an verschiedenen Einbaupositionen innerhalb des Fahrzeugs zu positionieren. Da sich diese - wie oben für das Datenbus-System beschrieben - nach dem Verbauen über das Datenbus-System anlernen lassen, können die Slave-Module vorteilhafterweise baugleich ausgeführt sein. Damit können die Slave-Module mit einer einzigen, einheitlichen Logistik-Teilenummer ausgeliefert und mit geringem Montageaufwand beim Fahrzeughersteller verbaut werden.

Weitere Merkmale, Vorteile und Anwendungsmöglichkeiten der Erfindung ergeben sich aus der nachfolgenden Beschreibung der Ausführungsbeispiele und Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen.

Im Folgenden wird die Erfindung anhand einer Zeichnung näher erläutert. Es zeigen:
- Fig. 1: ein Fahrzeug-Zugangssystem 100, das eine Steuereinrichtung und ein Daten-Bussystem aufweist für ein Ausführungsbeispiel der Erfindung,
- Fig. 2: ein Blockschaubild eins Daten-Bussystems mit einem Schaltbild einer Bus-Aktivierungsschaltung für ein Ausführungsbeispiel der Erfindung, und
- Fig. 3: ein Flussdiagramm für ein Verfahren gemäß einem Ausführungsbeispiel der Erfindung.

Die Figuren sind lediglich schematische Darstellungen und dienen nur der Erläuterung von Ausführungsbeispielen der Erfindung der Erfindung. Gleiche oder gleichwirkende Elemente sind durchgängig mit den gleichen Bezugszeichen versehen.

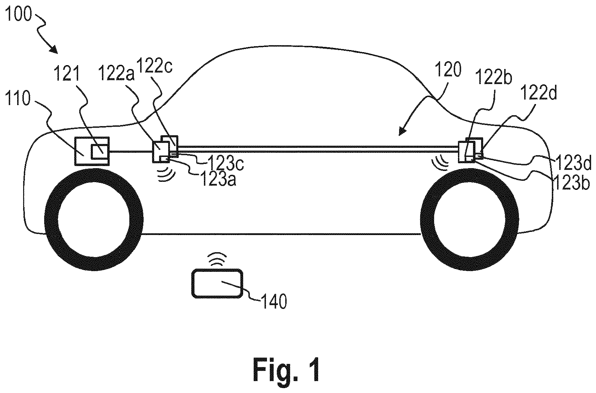

Figur 1 zeigt ein funkbasiertes Fahrzeug-Zugangssystem 100 zum wahlweisen Entriegeln und Verriegeln von Türen- und Klappen des Fahrzeugs. Das Fahrzeug-Zugangssystem 100 weist eine elektronische Steuereinrichtung 110 in Form eines Fahrzeug-Steuergeräts und ein Daten-Bussystem 120 auf, bei dem es sich hier um einen LIN-Bus handelt und über das die Steuereinrichtung 110 Daten austauscht.

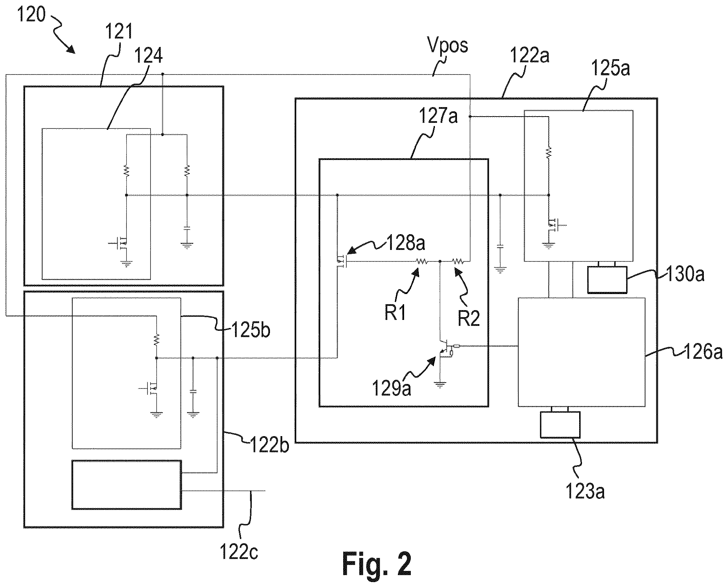

Das Daten-Bussystem 120 verfügt über ein Master-Modul 121, das hier integrativer Teil der Steuereinrichtung 110 ist (siehe auch Figur 2). Das Master-Modul 121 ist über ein vorzugsweise dreiadriges Kabel mit einer Mehrzahl von funkbasierten Slave-Modulen 122a-122d zum Datenaustausch verbunden, wobei die Slave-Module 122a-122d an zueinander unterschiedlichen Einbaupositionen des Fahrzeugs verbaut sind. Wie in Figur 1 angedeutet, befinden sich exemplarisch die Slave-Module 122a und 122b auf einer gemeinsamen, in Figur 1 linken Fahrzeugseite und die Slave-Module 122c und 122d auf einer dazu gegenüberliegenden, in Figur 1 rechten Fahrzeugseite. Zudem verfügen die Slave-Module 122a-122d jeweils über einen Funk-Transceiver 123a-123d zum Senden und Empfangen im z.B. UHF-Band und tauschen so einen Kodierungsschlüssel mit einem außerhalb des Fahrzeugs befindlichen funkbasierten Fahrzeugschlüssel 140 aus, um bei einem gültigen Kodierungsschlüssel (nicht gezeigte) Fahrzeugtüren wahlweise zu entriegeln und verriegeln.

In Figur 2 ist das Daten-Bussystem 120 in einem schematischen Blockschaltbild dargestellt. Das Master-Modul 121 und die Slave-Module 122a-122d sind in einer Daisy-Chain-Konfiguration angeordnet, also in Serie miteinander verbunden. Der Übersichtlichkeit halber sind hier nur die Slave-Module 122a und 122b gezeigt, wobei das nachfolgend beschriebene Prinzip auf beliebig viele Slave-Module erweiterbar ist, wie dies z.B. für das Slave-Modul 122c angedeutet ist, das wiederum mit dem in der Daisy-Chain-Konfiguration nächstfolgenden Slave-Modul 122d verbunden ist. Dabei sind sämtliche Slave-Module 122a-122d baugleich ausgeführt, so dass es sich um Gleichteile handelt. Die nachfolgenden Ausführungen zu den Slave-Modulen 122a, 122b sind deshalb ohne Weiteres auf die Slave-Module 122c, 122d übertragbar.

Das Master-Modul 121 umfasst im Wesentlichen einen Master-Bus-Transceiver 124, bei dem es sich hier um einen an sich bekannten LIN-Transceiver handelt. Ebenso weisen die Slave-Module 122a-122d jeweils einen Slave-Bus-Transceiver 125a-125d in Form eines LIN-Transceivers auf.

Darüber hinaus verfügt jedes Slave-Modul 122a-122d über einen Mikrocontroller 126a-126d, der über jeweils einen Eingangsanschluss und Ausgangsanschluss mit dem jeweiligen Slave-Bus-Transceiver 125a-125d verbunden ist.

Zum Zu- oder Abschalten des in der Daisy-Chain-Konfiguration nächstfolgenden Slave-Moduls 122b-122d weist jedes Slave-Modul 122a-122d eine diskret ausgeführte Bus-Aktivierungsschaltung 127a-127d, die auf einer eigenen Leiterplatte angeordnet und aus diskreten Bauelementen aufgebaut ist. Die jeweilige Bus-Aktivierungsschaltung 127a-127d umfasst ein erstes Schaltelement 128a-128d, das hier als n-Kanal-MOSFET ausgeführt ist. Dieses ist eingangsseitig mit dem Slave-Bus-Transceiver 125a-125d sowie dem Mikrocontroller 126a-126d und ausgangsseitig mit dem Slave-Bus-Transceiver 125b-125d des in der Daisy-Chain-Konfiguration nächstfolgenden Slave-Moduls 122b-122d verbunden. In anderen Worten, schaltet die Aktivierungsschaltung 127a-127d die Bus-Verbindung zu dem nächstfolgenden Slave-Modul 122a-122d wahlweise aus oder ein. Hierzu sind der Source-Anschluss des ersten Schaltelements 128a-128d mit dem Slave-Bus-Transceiver 125a-125d des eigenen Slave-Moduls 122a-122d verbunden und der Gate-Anschluss über zwei Widerstände R1 und R2 in Serie oder nur einen Widerstand mit der positiven Versorgungsspannung Vpos des Slave-Moduls 122a-122d verbunden. Der Drain-Anschluss ist mit dem Slave-Bus-Transceiver 125b-125d des nächstfolgenden Slave-Moduls 122b-122d verbunden.

Die Ansteuerung des ersten Schaltelements 128a-128d erfolgt jeweils über ein zweites Schaltelement 129a-129b, das hier als npn-Transistor ausgeführt ist. Ein Basis-Anschluss des zweiten Schaltelements 129a-129b ist mit einem Ausgangsanschluss des Mikrocontrollers 126a-126d, der Emitter-Anschluss mit Masse und der Kollektor-Anschluss ist zwischen den beiden Widerständen oder direkt mit dem Gate-Anschluss des ersten Schaltelements 128a-128d verbunden. Wenn der Mikrocontroller 126a-126d ein positives Spannungssignal, z.B. 5V, an seinen Ausgangsanschluss schaltet, schaltet das zweite Schaltelement 129a-129d durch und bewirkt, dass das erste Schaltelement 128a-128d sperrt, wodurch die Verbindung zwischen den Slave-Bus-Transceivern 125b-125d und damit auch die Verbindung des Slave-Bus-Transceivers 125b-125d des nächstfolgenden Slave-Moduls 122b-122d zu dem Master-Bus-Transceiver 124 getrennt werden.

Funktional betrachtet, schaltet der jeweilige Microcontroller 126a-126d eines in der Daisy-Chain-Konfiguration vorangehenden Slave-Modul 122a-122d über seine jeweilige Bus-Aktivierungsschaltung 127a-127d die Bus-Verbindung zu dem in der Daisy-Chain-Konfiguration nächstfolgenden Slave-Modul 122b-122d wahlweise ab oder zu. Die diesbezügliche Ansteuerung des Mikrocontrollers 126a-126d erfolgt über den Master-Bus-Transceiver 124 und den jeweiligen Slave-Bus-Transceiver 125a-125d.

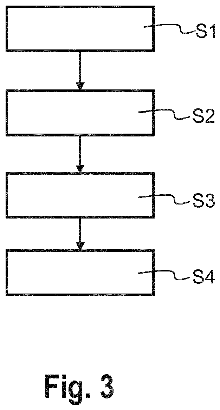

Anhand der Figuren 2 und 3, wobei Figur 3 ein Flussdiagramm mit den Schritten des Verfahrens zeigt, wird im Folgenden ein beispielhaftes Verfahren zum Anlernen einer eineindeutigen Einbauposition des jeweiligen Slave-Moduls 122a-122d erläutert.

Wie oben ausgeführt, sind die Slave-Module 122a-122d baugleich, jedoch an unterschiedlichen Einbaupositionen innerhalb des Fahrzeugs verbaut (vgl. Figur 1). Dabei ist die jeweilige Einbauposition insbesondere durch den vom Fahrzeughersteller verwendeten Leitungssatz bzw. Kabelbaum vorgegeben. Das Anlernen der jeweils eineindeutigen Einbauposition erfolgt vorzugsweise über eineindeutige Einbaupositions-Daten, die von dem Master-Modul 121 ausgesendet werden. Diese werden nach und nach in das betreffende Slave-Modul 122a-122d festgeschrieben, wozu diese jeweils einen Flash-Speicher 130a-130d aufweisen (siehe Figur 2). Beachtenswert ist, dass zum Zeitpunkt des Einbaus der Slave-Module 122a-122d der Flash-Speicher unbeschrieben ist.

In einem Schritt S1 erfolgt zunächst ein Trennen des hier auf das Slave-Modul 122a nächstfolgenden Slave-Bus-Transceivers 125b des Slave-Moduls 122b von dem Master-Bus-Transceiver 124 des Master-Moduls 121 durch Aufschalten der Spannung am Ausgangsanschluss des Mikrocontrollers 126a des Slave-Moduls 122a. Wie oben erläutert, sperrt das erste Schaltelement 128a des Slave-Moduls 122a daraufhin und trennt die Verbindung zu dem Slave-Bus-Transceiver 125b des Slave-Moduls 122b.

Dann erfolgt in einem Schritt S2 ein Festschreiben von eineindeutigen Einbaupositions-Daten, die das erste Slave-Modul 122a kennzeichnen, in den Flash-Speicher 130a des ersten Slave-Moduls 122a.

In einem Schritt S3 erfolgt dann ein Verbinden des Slave-Bus-Transceivers 122b mit dem Master-Bus-Transceiver 124 durch Abschalten der Spannung an dem ersten Schaltelement 128a. Damit kann der Master-Bus-Transceiver 124 nun auch mit dem nächstfolgenden Slave-Modul 122b kommunizieren.

In einem Schritt S4 werden dann die das nächstfolgende Slave-Modul 122b kennzeichnenden, eineindeutigen Einbaupositions-Daten in den Flash-Speicher 130b des Slave-Moduls 122b festgeschrieben.

Dieses Verfahren wird so oft wiederholt, bis sämtlichen Slave-Modulen die korrekten Einbaupositions-Daten zugeordnet und dort festgeschrieben sind. Diese können dann über das Master-Modul 121 über den Datenbus abgefragt werden.

Ergänzend sei darauf hinzuweisen, dass "umfassend" oder "aufweisend" keine anderen Elemente ausschließt und "ein" oder "einer" keine Vielzahl ausschließt. Ferner sei darauf hingewiesen, dass Merkmale, die mit Verweis auf eines der obigen Ausführungsbeispiele oder Ausführungsformen beschrieben worden sind, auch in Kombination mit anderen Merkmalen anderer oben beschriebener Ausführungsbeispiele oder Ausführungsformen verwendet werden können. Bezugszeichen in den Ansprüchen sind nicht als Einschränkungen anzusehen.

## Patentansprüche

1. Funkbasiertes Fahrzeug-Zugangssystem (100), aufweisend
- ein Datenbus-System (120) aufweisend
- ein Master-Modul (121) mit einem Master-Bus-Transceiver (124), und
- wenigstens ein erstes Slave-Modul (122a) sowie ein dazu baugleiches, zweites Slave-Modul (122b), die in einer Daisy-Chain-Konfiguration mit dem Master-Modul (121) angeordnet sind,
- wobei das erste Slave-Modul (122a) eine diskret ausgeführte Bus-Aktivierungsschaltung (127a) mit einem ersten Schaltelement (128a) aufweist, das eingangsseitig mit einem ersten Slave-Bus-Transceiver (125a) sowie über diesen mit einem ersten Mikrocontroller (126a) des ersten Slave-Moduls (122a) und ausgangsseitig mit einem zweiten Slave-Bus-Transceiver (125b) des zweiten Slave-Moduls (122b) verbunden ist,
und
wobei das erste Schaltelement (128a) zum wahlweisen Verbinden und Trennen des zweiten Slave-Bus-Transceivers (125b) mit dem Master-Bus-Transceiver (124) durch ein Spannungssignal des ersten Mikrocontrollers (126a) ansteuerbar ist,
ferner aufweisend
- eine Steuereinrichtung (110) zum wahlweisen Entriegeln und Verriegeln von Fahrzeugtüren, die mit dem Datenbus-System (120) verbunden ist, wobei das Master-Modul (121) integrativer Teil der Steuereinrichtung (110) ist,
wobei Fahrzeugtüren insofern mit dem Datenbus-System (120) verbunden sind, dass die Fahrzeugtüren mit der Steuereinrichtung des Datenbus-Systems (120) verbunden sind, zum wahlweisen Entriegeln und Verriegeln der Fahrzeugtüren durch die Steuereinrichtung,
- wobei die Slave-Module (122a-122d) des Datenbus-Systems (120), die über das Datenbus-System (120) mit der Steuereinrichtung (110) verbunden sind, ferner jeweils einen über das Datenbussystem (110) verbundenen Funk-Transceiver (123a-123d) zum Senden und Empfangen aufweisen, um einen Kodierungsschlüssel mit einem außerhalb des Fahrzeugs befindlichen funkbasierten Fahrzeugschlüssel (140) auszutauschen,
wobei der Kodierungsschlüssel zum wahlweises Entriegeln und Verriegeln von Fahrzeugtüren durch die Steuereinrichtung vorgesehen ist.

2. Funkbasiertes Fahrzeug-Zugangssystem (100) nach Anspruch 1, wobei der erste Mikrocontroller (126a) dazu eingerichtet ist, die Verbindung zwischen dem zweiten Slave-Bus-Transceiver (125b) und dem Master-Bus-Transceiver (124) zu trennen, wenn das Bus-Mastermodul (121) eineindeutige, erste Einbaupositions-Daten zum Festschreiben in dem ersten Slave-Modul (122a) aussendet.

3. Funkbasiertes Fahrzeug-Zugangssystem (100) nach Anspruch 1 oder 2, wobei der erste Mikrocontroller (126a) dazu eingerichtet ist, den zweiten Slave-Bus-Transceiver (125b) mit dem Master-Bus-Transceiver (124) zu verbinden, wenn das Bus-Mastermodul (121) eineindeutige, zweite Einbaupositions-Daten zum Festschreiben in dem zweiten Slave-Modul (122b) aussendet.

4. Funkbasiertes Fahrzeug-Zugangssystem (100) nach einem der vorhergehenden Ansprüche, wobei das erste und zweite Slave-Modul (122a, 122b) jeweils einen Flash-Speicher (130a, 130b) aufweisen, in dem eine eineindeutige Einbaupositions-Kennung des jeweiligen Slave-Moduls festschreibbar ist.

5. Funkbasiertes Fahrzeug-Zugangssystem (100) nach einem der vorhergehenden Ansprüche, wobei die Bus-Aktivierungsschaltung (127a-127d) auf einer zu dem jeweiligen Slave-Bus-Transceiver (125a-125d) und/oder dem jeweiligen Mikrocontroller (126a-126d) separaten Leiterplatte angeordnet ist.

6. Funkbasiertes Fahrzeug-Zugangssystem (100) nach einem der vorhergehenden Ansprüche, wobei das erste Schaltelement (128a-128d) ein n-Kanal-Feldeffekttransistor ist.

7. Funkbasiertes Fahrzeug-Zugangssystem (100) nach einem der vorhergehenden Ansprüche, wobei die Bus-Aktivierungsschaltung (127a-127d) ferner ein zwischen dem ersten Mikrocontroller (126a-126d) und dem ersten Schaltelement (128a-128d) angeordnetes, diskretes zweites Schaltelement (129a-129d) zum Ansteuern des ersten Schaltelements (128a-128d) aufweist.

## Claims

1. Radio-based vehicle access system (100) having
- a data bus system (120) having
- a master module (121) with a master bus transceiver (124), and
- at least a first slave module (122a) and a structurally identical second slave module (122b), which are arranged in a daisy-chain configuration with the master module (121),
- wherein the first slave module (122a) has a discrete bus activation circuit (127a) with a first switching element (128a) which is connected, on the input side, to a first slave bus transceiver (125a) and, via the latter, to a first microcontroller (126a) of the first slave module (122a) and is connected, on the output side, to a second slave bus transceiver (125b) of the second slave module (122b), and wherein the first switching element (128a) can be controlled to selectively connect and disconnect the second slave bus transceiver (125b) to/from the master bus transceiver (124) by means of a voltage signal from the first microcontroller (126a), also having
- a control device (110) for selectively unlocking and locking vehicle doors, which is connected to the data bus system (120), wherein the master module (121) is an integrative part of the control device (110),
wherein vehicle doors are connected to the data bus system (120) insofar as the vehicle doors are connected to the control device of the data bus system (120) for the selective unlocking and locking of the vehicle doors by means of the control device,
- wherein the slave modules (122a-122d) of the data bus system (120), which are connected to the control device (110) via the data bus system (120), also each have a radio transceiver (123a-123d) which is connected via the data bus system (110) and is intended to transmit and receive in order to exchange a coding key with a radio-based vehicle key (140) outside the vehicle,
wherein the coding key is provided for the selective unlocking and locking of vehicle doors by way of the control device.

2. Radio-based vehicle access system (100) according to Claim 1, wherein the first microcontroller (126a) is configured to disconnect the connection between the second slave bus transceiver (125b) and the master bus transceiver (124) if the bus master module (121) emits unique first installation position data for recording in the first slave module (122a).

3. Radio-based vehicle access system (100) according to Claim 1 or 2, wherein the first microcontroller (126a) is configured to connect the second slave bus transceiver (125b) to the master bus transceiver (124) if the bus master module (121) emits unique second installation position data for recording in the second slave module (122b).

4. Radio-based vehicle access system (100) according to one of the preceding claims, wherein the first and second slave modules (122a, 122b) each have a flash memory (130a, 130b) in which a unique installation position identifier of the respective slave module can be recorded.

5. Radio-based vehicle access system (100) according to one of the preceding claims, wherein the bus activation circuit (127a-127d) is arranged on a printed circuit board separate from the respective slave bus transceiver (125a-125d) and/or the respective microcontroller (126a-126d).

6. Radio-based vehicle access system (100) according to one of the preceding claims, wherein the first switching element (128a-128d) is an n-channel field effect transistor.

7. Radio-based vehicle access system (100) according to one of the preceding claims, wherein the bus activation circuit (127a-127d) also has a discrete second switching element (129a-129d) which is arranged between the first microcontroller (126a-126d) and the first switching element (128a-128d) and is intended to control the first switching element (128a-128d).

## Revendications

1. Système d'accès radioélectrique à un véhicule (100), comprenant
- un système de bus de données (120), comprenant
- un module maître (121) pourvu d'un émetteur-récepteur de bus maître (124), et
- au moins un premier module esclave (122a) ainsi qu'un deuxième module esclave (122b) de construction identique, qui sont disposés dans une configuration en guirlande avec le module maître (121),
- le premier module esclave (122a) possédant un circuit d'activation de bus (127a) réalisé de manière discrète avec un premier élément de commutation (128a) qui est relié côté entrée à un premier émetteur-récepteur de bus esclave (125a) ainsi que, par le biais de celui-ci, à un premier microcontrôleur (126a) du premier module esclave (122a) et côté sortie à un deuxième émetteur-récepteur de bus esclave (125b) du deuxième module esclave (122b), et
le premier élément de commutation (128a) pouvant être commandé par un signal de tension du premier microcontrôleur (126a) pour connecter et déconnecter sélectivement le deuxième émetteur-récepteur de bus esclave (125b) à/de l'émetteur-récepteur de bus maître (124),
comprenant en outre
- un dispositif de commande (110) destiné à déverrouiller et verrouiller sélectivement des portières de véhicule, qui est connecté au système de bus de données (120), le module maître (121) faisant partie intégrante du dispositif de commande (110),
les portières de véhicule étant connectées au système de bus de données (120) dans la mesure où les portières de véhicule sont connectées au dispositif de commande du système de bus de données (120) en vue du déverrouillage et du verrouillage sélectifs des portières de véhicule par le dispositif de commande,
- les modules esclaves (122a-122d) du système de bus de données (120), qui sont connectés au dispositif de commande (110) par le biais du système de bus de données (120), comprenant en outre respectivement un émetteur-récepteur radio (123a-123d) destiné à l'émission et à la réception et connecté par le biais du système de bus de données (110), afin d'échanger une clé de codage avec une clé de véhicule radioélectrique (140) qui se trouve à l'extérieur du véhicule,
la clé de codage étant prévue pour le déverrouillage et le verrouillage sélectifs des portières de véhicule par le dispositif de commande.

2. Système d'accès radioélectrique à un véhicule (100) selon la revendication 1, le premier microcontrôleur (126a) étant conçu pour déconnecter la liaison entre le deuxième émetteur-récepteur de bus esclave (125b) et l'émetteur-récepteur de bus maître (124) lorsque le module maître de bus (121) émet des premières données de position de montage univoques à enregistrer à demeure dans le premier module esclave (122a).

3. Système d'accès radioélectrique à un véhicule (100) selon la revendication 1 ou 2, le premier microcontrôleur (126a) étant conçu pour connecter le deuxième émetteur-récepteur de bus esclave (125b) à l'émetteur-récepteur de bus maître (124) lorsque le module maître de bus (121) émet des deuxièmes données de position de montage univoques à enregistrer à demeure dans le deuxième module esclave (122b).

4. Système d'accès radioélectrique à un véhicule (100) selon l'une des revendications précédentes, le premier et le deuxième module esclave (122a, 122b) possédant respectivement une mémoire flash (130a, 130b) dans laquelle peut être enregistré à demeure un identifiant de position de montage univoque du module esclave respectif.

5. Système d'accès radioélectrique à un véhicule (100) selon l'une des revendications précédentes, le circuit d'activation de bus (127a-127d) étant disposé sur une carte de circuit imprimé séparée de l'émetteur-récepteur de bus esclave (125a-125d) respectif et/ou du microcontrôleur (126a-126d) respectif.

6. Système d'accès radioélectrique à un véhicule (100) selon l'une des revendications précédentes, le premier élément de commutation (128a-128d) étant un transistor à effet de champ à canal N.

7. Système d'accès radioélectrique à un véhicule (100) selon l'une des revendications précédentes, le circuit d'activation de bus (127a-127d) possédant en outre un deuxième élément de commutation (129a-129d) discret, disposé entre le premier microcontrôleur (126a-126d) et le premier élément de commutation (128a-128d), destiné à commander le premier élément de commutation (128a-128d).
